# EUROPÄISCHE PATENTSCHRIFT

(11) **EP 0 894 523 B1**
(45) Veröffentlichungstag und Bekanntmachung des Hinweises auf die Patenterteilung: **01.10.2003**
(21) Anmeldenummer: 97112962.2
(22) Anmeldetag: 28.07.1997
(51) Int. Cl.: B01D 53/86, B01F 5/06, B01J 35/02, F01N 3/28

(54) **Verwendung eines statischer Mischers als Hydrilysekatalysator sowie dessen Verwendung in einer Abgasleitung für eine Verbrennungsanlage**
Use of a static mixer as catalyst for hydrolysis and the use thereof for an exhaust duct for a combustion system
L'utilisation d'un mélangeur statique comme catalyseur pour l'hydrolyse et son utilisation pour un tuyau de gaz d'échappement pour une installation de combustion

(43) Veröffentlichungstag der Anmeldung: 03.02.1999
(73) Patentinhaber: SIEMENS AKTIENGESELLSCHAFT, 80333 München (DE)
(72) Erfinder: Neufert, Roland, Dr.rer.nat., 96247 Michelau (DE); Mathes, Wieland, Dipl.-Ing., 96247 Michelau (DE); Wenzlawski, Klaus, Dr.Ing., 90429 Nürnberg (DE); Weisensel, Dietmar, 93161 Sinzing (DE); Wissler, Gerhard, Dr.rer.nat., 93104 Sünching (DE); Pajonk, Günther, Dr.rer.nat., 96199 Zapfendorf/OT Lauf (DE); Hofmann, Lothar, Dipl.-Ing., 96224 Burgkunstadt (DE); Weigl, Manfred, Dipl.-Phys., 93161 Sinzing (DE); Zürbig, Jürgen, Dr.rer.nat., 96224 Burgkunstadt (DE); Dölling, Winfried, Dipl.-Ing., 96369 Weissenbrunn/Kronach (DE); Tost, Rainer, 90427 Nürnberg (DE)
(74) Vertreter: Tergau & Pohl Patentanwälte

(56) Entgegenhaltungen:
- EP-A- 0 555 746
- EP-A- 0 785 105
- WO-A-97/01387
- DE-A- 4 313 393
- DE-A- 4 421 066
- US-A- 5 229 079
- US-A- 5 390 493

## Beschreibung

Die Erfindung betrifft einen statischen Mischer sowie eine Abgasleitung für eine Verbrennungsanlage, in welcher der statische Mischer angeordnet ist. Der statische Mischer ist dabei mit einer Anzahl von Mischelementen zur Verwirbelung eines den Mischer durchströmenden Fluids sowie mit einer katalytisch aktiven Beschichtung versehen.

Ein statischer Mischer wird im allgemeinen in von einem Fluid durchströmten Stromungskanal eingebaut und dient dazu, zuvor in das Fluid eingebrachte Stoffe mit diesem zu vermischen und möglichst homogen zu verteilen. Mittels eines statischen Mischers können damit z.B. in das Fluid eingebrachte Gase miteinander vermischt werden. Auch können flüssige oder staubförmige Stoffe in dem Fluid gleichmäßig verteilt werden.

Eine bevorzugte Anwendungsform für einen statischen Mischer ist die Vermischung eines stickoxidhaltigen Abgases einer Verbrennungsanlage mit einem Reduktionsmittel wie beispielsweise Ammoniak, das nachfolgend in einen bekannten DeNOₓ-Katalysator geleitet wird. Dort werden die Stickoxide und das Reduktionsmittel nach dem Verfahren der selektiven katalytischen Reduktion katalytisch in Wasser sowie molekularem Stickstoff umgesetzt.

Aus der DE 43 13 393 A1 ist ein statischer Mischer bekannt, welcher eine Anzahl von in Strömungsrichtung des Fluids aus der Ebene des Mischers herausragende Mischelemente aufweist. Der Mischer ist dabei ferner mit einer Funktionsschicht beschichtet, die bereits Aufgaben einer nachfolgenden Anlagenkomponente wahrnimmt. Insbesondere ist die Funktionsschicht als eine katalytisch aktive Beschichtung ausgebildet, welche Titandioxid mit einem oder mehreren der Zusätze Wolframtrioxid, Molybdäntrioxid und Vanadinpentoxid umfaßt. Auf diese Weise übernimmt der statische Mischer teilweise bereits die Aufgabe eines nachgeschalteten DeNOₓ-Katalysators, nämlich die Zersetzung von im Fluid enthaltenen Stickoxiden.

Speziell bei der Zersetzung von im Abgas enthaltenen Stickoxiden mittels des Verfahrens der selektiven katalytischen Reduktion ist es bekannt, anstelle von Ammoniak ein Reduktionsmittel wie Harnstoff, Ammoniakwasser oder sonstige organische Vorläuferverbindungen zu verwenden, welches nach der Einbringung in das Abgas Ammoniak freisetzt. Ein derartiges Reduktionsmittel bietet gegenüber Ammoniak den Vorteil einer leichteren Handhabbarkeit. Die Verwendung von Harnstoff hat sich hierbei insbesondere bei der Entstickung von Abgasen einer instationären Verbrennungsanlage, wie beispielsweise einem Dieselmotor, welcher zur Traktion eines PKW oder eines LKW eingesetzt wird, durchgesetzt.

Um die Zersetzung des Reduktionsmittels zu beschleunigen, ist es ferner bekannt, dieses auf einen sogenannten Hydrolyse-Katalysator aufzusprühen, welcher einem DeNOₓ-Katalysator vorgeschaltet ist, und das Reduktionsmittel durch Hydrolyse in Ammoniak umsetzt.

Ein effektives Gesamtsystem zur Entstickung eines Fluids oder eines Abgases mittels eingedüstem Reduktionsmittel nach dem Verfahren der selektiven katalytischen Reduktion umfaßt daher eine Einbringvorrichtung für das Reduktionsmittel, einen in Strömungsrichtung des Abgases oder Fluids nachgeschalteten Hydrolyse-Katalysator, einen diesem nachgeschalteten statischen Mischer zur Vermischung des entstandenen Ammoniaks mit dem Fluid oder dem Abgas und einen dem Mischer folgenden DeNOₓ-Katalysator. Aufgrund der vielen Einzelkomponenten beansprucht ein derartiges System ein relativ großes Bauvolumen, was insbesondere bei kleinen vorgegebenen Bauräumen, wie beispielsweise in einer Abgasleitung eines PKW oder eines LKW, zu Problemen führt. Aber auch in einer Abgasleitung einer großtechnischen Verbrennungsanlage wie einem Fossilkraftwerk oder einer Müllverbrennungsanlage beansprucht ein derartiges System unzweckmäßig viel Bauraum.

In der EP 0 555 746 A1 ist eine Vorrichtung zur katalytischen NOx-Reduktion offenbart. Dabei ist insbesondere ein Verdampfer vorgesehen, welcher zum einen zur Verdampfung von Harnstoff als Reduktionsmittel, und zum anderen zur Vermischung und Verteilung der Harnstofflösung mit schadstoffbelastetem Abgas ausgelegt ist. Letztgenannte Aufgabe ist in besagter Druckschrift dadurch gelöst, daß der Verdampfer mit nicht geradlinigen, langgestreckten Kanälen ausgestattet ist, welche zueinander in strömungstechnischer Verbindung stehen.

Trotz der dadurch erreichten, durch die Kombination der Hydrolyse - mit der Vermischungsfunktion realisierten, Reduzierung der Baulänge der Vorrichtung zur NOx-Reduktion ist eine derartige Vorrichtung in Strömungsrichtung des Abgases immer noch relativ lang erstreckt, da die Vermischungsfunktion mittels der oben genannten Kanäle eine bestimmte Mindestlänge erfordert, um eine genügende Vermischung des Abgases mit dem Hydrolyseprodukt zu erreichen, bevor das Gemisch einem DeNOx-Katalysator zugeführt wird. Aufgabe der Erfindung ist es daher, den Bauraum eines Gesamtsystems zur Entstickung eines Fluids oder eines Abgases mittels eines Reduktionsmittels nach dem Verfahren der selektiven katalytischen Reduktion gegenüber dem Stand der Technik ohne einen Effizienzverlust zu verringern.

Diese Aufgabe wird durch eine Verwendung eines statischen Mischers gemäß Anspruch 1 gelöst. Vorteilhafte Ausgestaltungen sind den jeweiligen Unteransprüchen entnehmbar.

Bisherige Überlegungen zur Verringerung des Bauraums zielen darauf ab, den statischen Mischer und den DeNOₓ-Katalysator zu einem Bauelement zu kombinieren, welches das Reduktionsmittel mit dem Fluid durchmischt und dabei gleichzeitig die enthaltenen Stickoxide katalytisch zersetzt.

Die Erfindung geht nun von der Überlegung aus, daß sich durch eine Kombination des statischen Mischers mit dem DeNOₓ-Katalysator keine befriedigende Lösung erreichen läßt, da ein statischer Mischer eine zu geringe Oberfläche für eine katalytische Zersetzung der Stickoxide aufweist und ein DeNOₓ-Katalysator auf der anderen Seite sich aufgrund der für eine katalytische Zersetzung notwendigen baulichen Gegebenheiten wie einer gewissen Anzahl von separaten Strömungskanälen nicht für eine gute Vermischung eignet.

Ein statischer Mischer kann jedoch die Aufgabe eines Hydrolyse-Katalysators übernehmen, da ein derartiger Hydrolyse-Katalysator die Zersetzung des Reduktionsmittels in Ammoniak lediglich unterstützt. Ein Teil des Reduktionsmittels zerfällt aufgrund der verhältnismäßig hohen Temperaturen im Abgas von selbst.

Wird daher ein statischer Mischer mit einer katalytisch aktiven Beschichtung zur Hydrolyse des Reduktionsmittels versehen, so kann dieser auch aufgrund seiner gegenüber einem Katalysator verhältnismäßig kleinen Oberflache dennoch einen vorgeschalteten Hydrolyse-Katalysator vollständig ersetzen.

Besonders vorteilhaft für die katalytische Aktivität hinsichtlich der Hydrolyse von Harnstoff ist es, wenn die katalytisch aktive Beschichtung neben Titandioxid einen oder mehrere der Zusätze Wolframtrioxid, Molybdäntrioxid und Vanadinpentoxid umfaßt. Das Titandioxid ist vorteilhafterweise ein Titandioxid mit einer spezifischen Oberfläche von 5 bis 100 m²/g und einem Porenvolumen von 20 bis 800 ml/g ist. Durch die vergleichsweise hohe spezifische Oberfläche bei dem angegebenen Porenvolumen wird eine effektive Umsetzung des Reduktionsmittels in Ammoniak erreicht.

In vorteilhafter Weiterbildung der Erfindung umfaßt die katalytisch aktive Beschichtung 65 bis 95 Gew.% des Titandioxids sowie als Zusätze jeweils höchstens 10 Gew.% Wolframtrioxid, Molybdäntrioxid, Sulfat und Phosphat und höchstens 8 Gew.% Vanadinpentoxid. Insbesondere wird dabei durch die Zusätze Sulfat und Phosphat, welche in der katalytisch aktiven Beschichtung in Form von Ionen vorliegen, eine hohe katalytische Aktivität für die Hydrolyse des Harnstoffs erzielt.

Insbesondere für den Einsatz des statischen Mischers in einer Abgasleitung einer instationären Verbrennungsanlage in einem zur Traktion eingesetzten Dieselmotor ist es vorteilhaft, wenn der statische Mischer mit einer Heizeinrichtung versehen ist. Auf diese Weise kann insbesondere in der Startphase oder bei einem Lastwechsel, wo vergleichsweise niedrige Abgastemperaturen auftreten, das Abgas beim Durchströmen des statischen Mischers aufgewärmt werden. Dadurch wird die bei niedrigen Temperaturen geringe katalytische Aktivität eines nachgeschalteten DeNOₓ-Katalysators erheblich verbessert. Gleichzeitig wird durch die Beheizung des statischen Mischers auch dessen Reaktivität für die Hydrolyse des Reduktionsmittels erhöht. Auf diese Weise wird eine hohe Effizienz zur Stickoxidminderung auch bei kalten Abgastemperaturen erreicht.

Von Vorteil ist es dabei, wenn die Heizeinrichtung eine elektrische Heizeinrichtung ist. Dadurch kann die eingebrachte Heizleistung der jeweils vorherrschenden Temperatur des Fluids leicht durch eine Strom- oder Spannungsänderung angepaßt werden. Die elektrische Heizeinrichtung kann dabei indirekt an oder neben dem statischen Mischer beispielsweise in Form einer Heizwendel oder in Form einer die umgebende Fluidführung umspannenden Heizspule oder auch direkt durch Einschalten des statischen Mischers als Heizwiderstand in einem elektrischen Stromkreis ausgeführt sein.

Insbesondere für die direkte Ausführung der elektrischen Heizeinrichtung ist es vorteilhaft, wenn die katalytisch aktive Beschichtung des statischen Mischers auf einem Träger aus Metall aufgebracht ist und die elektrische Heizeinrichtung den Träger als Heizwiderstand umfaßt. Dies ermöglicht eine einfache Bauform der elektrischen Heizeinrichtung, da lediglich der metallische Träger durch Anschluß an entsprechende Verbindungsdrähte in den Stromkreis einer Strom- oder Spannungsquelle eingeschaltet werden muß.

In einer weiteren vorteilhaften Ausgestaltung für eine direkte elektrische Heizeinrichtung ist die katalytisch aktive Beschichtung selbst elektrisch leitfähig, wobei die elektrische Heizeinrichtung nunmehr die katalytisch aktive Beschichtung als Heizwiderstand umfaßt. Die eigentlich oxidische oder keramische Beschichtung kann insbesondere durch Einlegen von Metallfäden verhältnismäßig leicht elektrisch leitfähig gemacht werden.

Die Aufgabe führt weiter zu einer Verwendung eines statischen Mischers in einer Abgasleitung für eine Verbrennungsanlage, insbesondere für einen Dieselmotor gemäß Anspruch 9.

Durch die katalytisch aktive Beschichtung des statischen Mischers kann auf einen vorgeschalteten Hydrolyse-Katalysator zur Zersetzung des Reduktionsmittels verzichtet werden, so daß das Bauvolumen des Systems verkleinert wird.

Ein Ausführungsbeispiel der Erfindung wird anhand einer Zeichnung näher erläutert. Dabei zeigen:
- FIG 1: eine perspektivische Aufsicht auf die Mischebene eines statischen Mischers,
- FIG 2: eine Aufsicht auf die Mischebene gemäß FIG 1 entlang der Linie II bis II, und
- FIG 3: einen Dieselmotor mit einer daran angeschlossenen Abgasleitung sowie einem darin angeordneten statischen Mischer. FIG 1 zeigt die Mischebene eines statischen Mischers 1, der in Reihen 2 bis 16 angeordnete trapezförmige Mischelemente 18 umfaßt. Die Reihen 2 bis 16 sind in einem metallischen Träger 20 in Form eines Gitters parallel zueinander eingebaut. Die Mischelemente 18 ragen dabei aus der Ebene des Trägers 20 heraus. Die Mischelemente 18 sind innerhalb einer jeden Reihe 2 bis 16 parallel zueinander angeordnet,

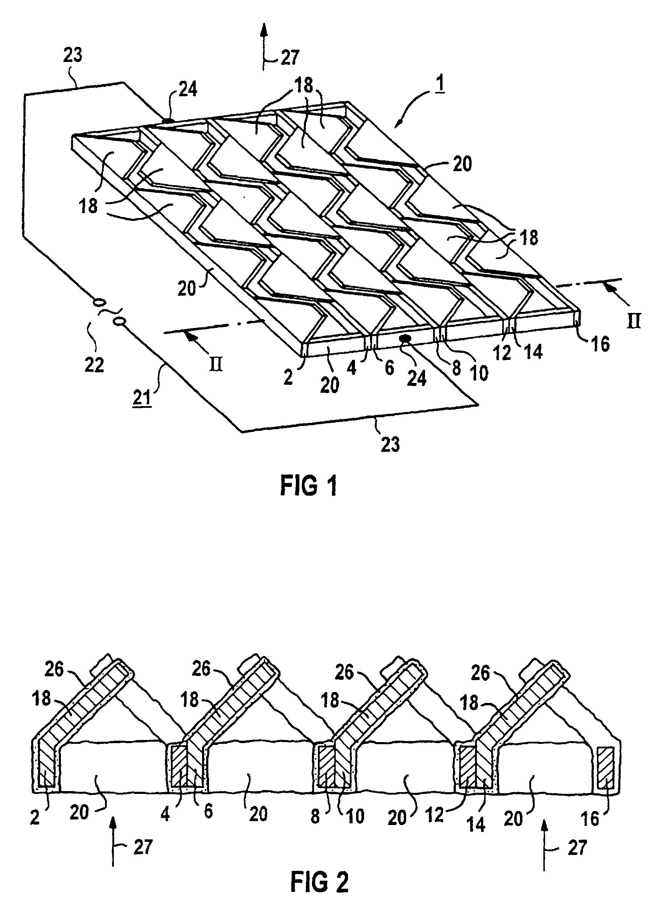

FIG 1 zeigt die Mischebene eines statischen Mischers 1, der in Reihen 2 bis 16 angeordnete trapezförmige Mischelemente 18 umfaßt. Die Reihen 2 bis 16 sind in einem metallischen Träger 20 in Form eines Gitters parallel zueinander eingebaut. Die Mischelemente 18 ragen dabei aus der Ebene des Trägers 20 heraus. Die Mischelemente 18 sind innerhalb einer jeden Reihe 2 bis 16 parallel zueinander angeordnet, bzgl. benachbarter Reihen jedoch versetzt angeordnet und um etwa 45° geneigt. Dabei sind die Auslenkelemente 18 benachbarter Reihen gegenläufig geneigt. Sowohl der Träger 20 als auch die Mischelemente 18 sind mit einem katalytisch aktiven Material 26, was aus Gründen der Übersichtlichkeit lediglich in FIG 2 dargestellt ist, beschichtet. Die Beschichtung 26 umfaßt 87 Gew.% Titandioxid des Anatas-Typs mit einer spezifischen Oberfläche von 60 m²/g und einem Porenvolumen von 320 ml/g. Als Zusätze sind weiter 8 Gew.% Wolframtrioxid, 2 Gew.% Sulfat und 0,1 Gew.% Vanadinpentoxid sowie ein Rest an Bindemittel umfaßt.

Der statische Mischer 1 ist mit einer elektrischen Heizeinrichtung 21 versehen. Dabei ist der statische Mischer 1 an eine Spannungsquelle 22 mittels der Anschlußdrahte 23 angeschlossen. Die Anschlußdrähte sind dabei jeweils über den Anschluß 24 mit dem metallischen Träger 20 kontaktiert. Die Spannungsquelle 22 ist dabei als eine steuerbare Wechselspannungsquelle ausgeführt.

Der statische Mischer 1 wird derart in einer Abgasleitung angeordnet, daß er gemäß der eingezeichneten Strömungsrichtung 27 durchströmt wird.

FIG 2 zeigt zur Verdeutlichung des Aufbaus des statischen Mischers einen Querschnitt gemäß der in FIG 1 gezeigten Linie II bis II. Sowohl der metallische Träger 20 als auch die Mischelemente 18 sind mit der katalytischen aktiven Beschichtung 26 versehen. Die katalytisch aktive Beschichtung 26 kann beispielsweise durch Eintauchen des statischen Mischers 1 in eine entsprechend hergestellte Aufschlämmung aufgebracht werden. Ebenso kann die katalytisch aktive Beschichtung 26 auch aufgesprüht werden.

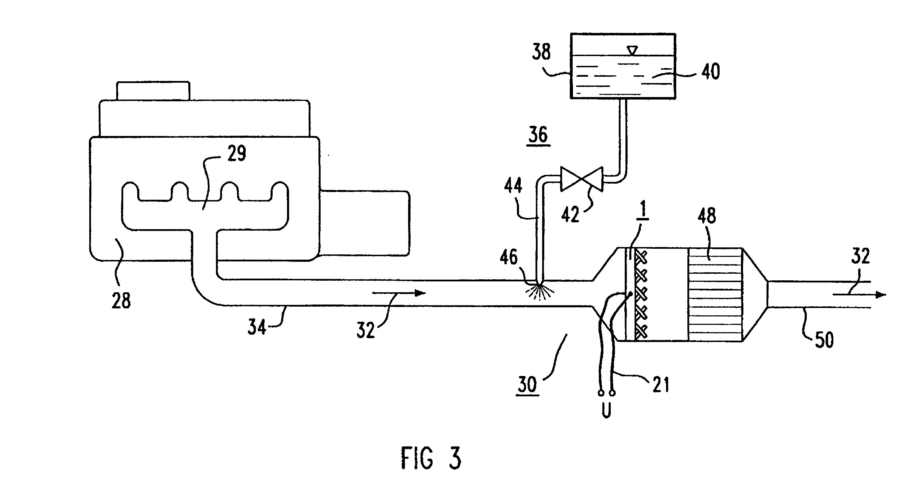

In FIG 3 ist als Verbrennungsanlage 28 ein Dieselmotor dargestellt. Der Dieselmotor 28 umfaßt hierbei einen Auspuffkrümmer 29, an den die Abgasleitung 30 angeschlossen ist.

Über den Auspuffkrümmer 29 gelangt das Abgas 32 des Dieselmotors zunächst in ein Abgasrohr 34 der Abgasleitung 30. Über eine Einbringvorrichtung 36 wird das in einem Vorratstank 38 bevorratete, Ammoniak freisetzende Reduktionsmittel 40 - im vorliegenden Fall ist dies Harnstoff - dem Abgas 32 zugeführt. Dabei wird über ein Dosierventil 42 eine vorgebbare Menge des Reduktionsmittels 40 über eine Zuführleitung 44 einer Zerstäuberdüse 46 zugeführt und fein verteilt in das Abgas 32 eingesprüht.

Das mit Harnstoff versehene Abgas 32 strömt anschließend durch einen statischen Mischer 1 gemäß FIG 1 und FIG 2, welcher mit einer für die Hydrolyse von Harnstoff katalytisch aktiven Beschichtung versehen ist. Durch die katalytisch aktive Beschichtung mit bereits beschriebener Zusammensetzung wird der Harnstoff 40 in Ammoniak sowie Restbestandteile zersetzt. Gleichzeitig wird das Abgas 32 beim Durchströmen des statischen Mischers 1 homogen mit dem freigesetzten Ammoniak vermischt.

Das homogen mit Ammoniak vermischte Abgas 32 durchströmt anschließend einen wabenförmigen DeNOₓ-Katalysator 48 bekannter Zusammensetzung, wobei die in dem Abgas enthaltenen Stickoxide mittels Ammoniak nach dem Verfahren der selektiven katalytischen Reduktion zu molekularem Stickstoff und Wasser zersetzt werden. Das Abgas 32 wird dann über einen Auspuff 50 gereinigt an die Umwelt abgegeben.

## Patentansprüche

1. Verwendung eines im Wesentlichen ebenen statischen Mischers (1) mit einer Anzahl von in einem Strömungskanal in Strömungsrichtung eines Fluids aus der Ebene des Mischers (1) abströmseitig herausragenden Mischelementen (18) zur Verwirbelung des den Mischer (1) durchströmenden Fluids, der mit einer katalytisch aktiven Beschichtung (26), umfassend Titandioxid, versehen ist, als Hydrolysekatalysator, wobei die Beschichtung für die Hydrolyse eines Reduktionsmittels, insbesondere von Harnstoff, katalytisch aktiv ist.

2. Verwendung nach Anspruch 1, wobei
die katalytisch aktive Beschichtung (26) neben Titandioxid einen oder mehrere der Zusätze Wolframtrioxid, Molybdäntrioxid und Vanadinpentoxid umfaßt.

3. Verwendung nach Anspruch 1 oder 2, wobei
das Titandioxid ein Titandioxid mit einer spezifischen Oberfläche von 5 bis 100 m2/g und einem Porenvolumen von 20 bis 800 ml/g ist.

4. Verwendung nach einem der Ansprüche 1 bis 3, wobei
die katalytisch aktive Beschichtung (26) 65 bis 95 Gew.-% des Titandioxids sowie als Zusätze jeweils höchstens 10 Gew.-% Wolframtrioxid, Molybdäntrioxid, Sulfat und Phosphat und höchstens 8 Gew.-% Vanadinpentoxid umfaßt.

5. Verwendung nach einem der Ansprüche 1 bis 4, wobei der statische Mischer (1) mit einer Heizeinrichtung versehen ist.

6. Verwendung nach Anspruch 5, wobei die Heizeinrichtung eine elektrische Heizeinrichtung (21) ist.

7. Verwendung nach Anspruch 6, wobei die katalytisch aktive Beschichtung (26) auf einem Träger (20) aus Metall aufgebracht ist und die elektrische Heizeinrichtung (21) den Träger (20) als Heizwiderstand umfaßt.

8. Verwendung nach Anspruch 6, wobei
die katalytisch aktive Beschichtung (26), insbesondere durch eingelegte Metallfäden, elektrisch leitfähig ist und die elektrische Heizeinrichtung (21) die katalytisch aktive Beschichtung (26) als Heizwiderstand umfaßt.

9. Verwendung eines im Wesentlichen ebenen statischen Mischers (1) mit einer Anzahl von in einem Strömungskanal in Strömungsrichtung eines Fluids aus der Ebene des Mischers (1) abströmseitig herausragenden Mischelementen (18) zur Verwirbelung des den Mischer (1) durchströmenden Fluids, der mit einer katalytisch aktiven Beschichtung (26), umfassend Titandioxid, versehen ist, als Hydrolysekatalysator in einer Abgasleitung (30) für eine Verbrennungsanlage (28), insbesondere einen Dieselmotor, mit einem von einem Abgas (34) durchströmbaren Abgasrohr (32), einer Einbringvorrichtung (36) für Harnstoff (40), dem in Strömungsrichtung (27) des Abgases (34) nachgeschalteten statischen Mischer (1) und einem in Strömungsrichtung (27) des Abgases (34) dem Mischer (1) nachgeschalteten DeNOx-Katalysator (46) zur Reduzierung der im Abgas (34) enthaltenen Stickoxide, wobei die Beschichtung für die Hydrolyse eines Reduktionsmittels, insbesondere von Harnstoff, katalytisch aktiv ist.

## Claims

1. Use of a substantially planar static mixer (1) having a number of mixing elements (18), which in a flow passage project out of the plane of the mixer (1) on the outlet side as seen in the direction of flow of a fluid, for swirling up the fluid flowing through the mixer (1), which is provided with a catalytically active coating (26) comprising titanium dioxide, as a hydrolysis catalytic converter, the coating being catalytically active for the hydrolysis of a reducing agent, in particular of urea.

2. Use according to Claim 1, wherein the catalytically active coating (26), in addition to titanium dioxide, also comprises one or more of the additives tungsten trioxide, molybdenum trioxide and vanadium pentoxide.

3. Use according to Claim 1 or 2, wherein the titanium dioxide is a titanium dioxide with a specific surface area of from 5 to 100 m²/g and a pore volume of 20 to 800 ml/g.

4. Use according to one of Claims 1 to 3, wherein the catalytically active coating (26) comprises from 65 to 95% by weight of the titanium dioxide and, as additives, in each case at most 10% by weight of tungsten trioxide, molybdenum trioxide, sulphate and phosphate and at most 8% by weight of vanadium pentoxide.

5. Use according to one of Claims 1 to 4, wherein the static mixer (1) is provided with a heater device.

6. Use according to Claim 5, wherein the heater device is an electric heater device (21).

7. Use according to Claim 6, wherein the catalytically active coating (26) is applied to a substrate (20) made from metal, and the electric heater device (21) comprises the substrate (20) as a heating resistor.

8. Use according to Claim 6, wherein the catalytically active coating (26), in particular as a result of incorporated metal filaments, is electrically conductive, and the electric heater device (21) comprises the catalytically active coating (26) as heating resistor.

9. Use of a substantially planar static mixer (1) having a number of mixing elements (18), which in a flow passage project out of the plane of the mixer (1) on the outlet side as seen in the direction of flow of a fluid, for swirling up the fluid flowing through the mixer (1), which is provided with a catalytically active coating (26) comprising titanium dioxide, as a hydrolysis catalytic converter, in an exhaust-gas line (30) for a combustion installation (28), in particular a diesel engine, having an exhaust pipe (32), through which an exhaust gas (34) can flow, a device (36) for introducing urea (40), the static mixer (1) connected downstream as seen in the direction of flow (27) of the exhaust gas (34), and a deNOx catalytic converter (46), which is connected downstream of the mixer (1) as seen in the direction of flow (27) of the exhaust gas (34), for reducing the nitrogen oxides contained in the exhaust gas (34), the coating being catalytically active in the hydrolysis of a reducing agent, in particular of urea.

## Revendications

1. Utilisation d'un mélangeur (1) statique sensiblement plan comportant un nombre d'éléments mélangeurs (18) en saillie coté aval hors du plan du mélangeur (1) dans un canal d'écoulement en direction d'écoulement d'un fluide, pour faire tourbillonner le fluide traversant le mélangeur (1) et lequel est doté d'un revêtement (26) actif du point de vue catalytique. comprenant du dioxyde de titane, servant de catalyseur pour l'hydrolyse, le revêtement étant actif du point de vue catalytique pour l'hydrolyse d'un agent de réduction, en particulier d'urée.

2. Utilisation selon la revendication 1, dans laquelle le revêtement (26) actif du point de vue catalytique comprend, en plus du dioxyde de titane, un ou plusieurs des additifs que sont le trioxyde de tungstène, le trioxyde de molybdène et le pentaoxyde de vanadium.

3. Utilisation selon l'une ou l'autre des revendications 1 et 2, dans laquelle le dioxyde de titane est un dioxyde de titane avec une surface spécifique de 5 à 100 m²/g et un volume poreux de 20 à 800 ml/g.

4. Utilisation selon l'une des revendications 1 à 3, dans laquelle revêtement (26) actif du point de vue catalytique comprend 65 à 95 % en poids de dioxyde de titane ainsi qu'à titre d'additifs respectivement au plus 10 % en poids de trioxyde de tungstène, de trioxyde de molybdène, de sulfate et de phosphate et au plus 8 % en poids de pentaoxyde de vanadium.

5. Utilisation selon l'une des revendications 1 à 4, dans laquelle le mélangeur statique (1) est doté d'un dispositif de chauffage.

6. Utilisation selon la revendication 5, dans laquelle le dispositif de chauffage est un dispositif de chauffage électrique (21).

7. Utilisation selon la revendication 6, dans laquelle le revêtement (26) actif du point de vue catalytique est appliqué sur un support (20) en métal et le dispositif de chauffage électrique (21) comprend le support (20) à titre de résistance de chauffage.

8. Utilisation selon la revendication 6, dans laquelle le revêtement (26) actif du point de vue catalytique est élecoroconducteur en particulier par des fils métalliques insérés, et le dispositif de chauffage électrique (21) comprend le revêtement (26) actif du point de vue catalytique à titre de résistance de chauffage.

9. Utilisation d'un mélangeur (1) statique sensiblement plan comportant un nombre d'éléments mélangeurs (18) en saillie côté aval hors du plan du mélangeur (1) dans un canal d'écoulement en direction d'écoulement d'un fluide, pour faire tourbillonner le fluide traversant le mélangeur (1) et lequel est doté d'un revêtement (26) actif du point de vue catalytique, comprenant du dioxyde de titane, servant de catalyseur pour l'hydrolyse dans une conduite de gaz d'échappement (30) pour une installation de combustion (28), en particulier pour un moteur diesel, comportant un tube de gaz d'échappement (32) à travers lequel peut s'écouler un gaz d'échappement (34), un dispositif de chargement (36) pour de l'urée (40), le mélangeur (1) statique monté en aval en direction d'écoulement (27) du gaz d'échappement (34) et un catalyseur (46) de DeNOx monté en aval du mélangeur (1) en direction d'écoulement du gaz d'échappement (34) pour réduire les oxydes azotiques contenus dans le gaz d'échappement (34), le revêtement étant actif du point de vue catalytique pour l'hydrolyse d'un agent de réduction, en particulier d'urée.
